# EUROPEAN PATENT APPLICATION

(11) **EP 3 761 577 A1**
(43) Date of publication of application: **06.01.2021**
(21) Application number: 18908174.8
(22) Date of filing: 22.11.2018
(51) Int. Cl.: H04L 12/801

(54) **MESSAGE PROCESSING METHOD AND APPARATUS, AND STORAGE MEDIUM**

(30) Priority: 01.03.2018 CN 201810172804
(71) Applicant: ZTE Corporation, Shenzhen, Guangdong 518057 (CN)
(72) Inventor: HUANG, Chencheng, Shenzhen, Guangdong 518057 (CN)
(74) Representative: WBH Wachenhausen Patentanwälte PartG mbB
(86) International application number: PCT/CN2018/117043
(87) International publication number: WO 2019/165805

(57) **Abstract**

Disclosed is a message processing method, including: constructing, by a control plane device, a first proxy processing table based on a first type of message and a processing manner for the first type of message, and sending the first proxy processing table to a forwarding plane device, the first proxy processing table being configured for indicating a processing manner for the first type of message by the forwarding plane device; receiving, by the forwarding plane device, the first proxy processing table, and processing a received first message based on the first proxy processing table. A message processing apparatus, and a storage medium are further provided.

## Description

### CROSS-REFERENCE TO RELATED PRESENT APPLICATION

This application is filed based on and claims the priority of Chinese patent application No.201810172804.8 filed March 01, 2018, the entire contents of which are incorporated herein by reference.

### TECHNICAL FIELD

The present invention relates to the field of communications, and in particular, to a message processing method, an apparatus, and a storage medium.

### BACKGROUND

Software Defined Network (SDN) is a new network architecture, and the core function of SDN is to separate a control plane of a network device from a forwarding plane of the network device. After separation, the control plane is open and controlled centrally by a controller through OpenFlow protocol. The controller may flexibly control network services, and can change information centrally, without the need to configure and change each network device separately.

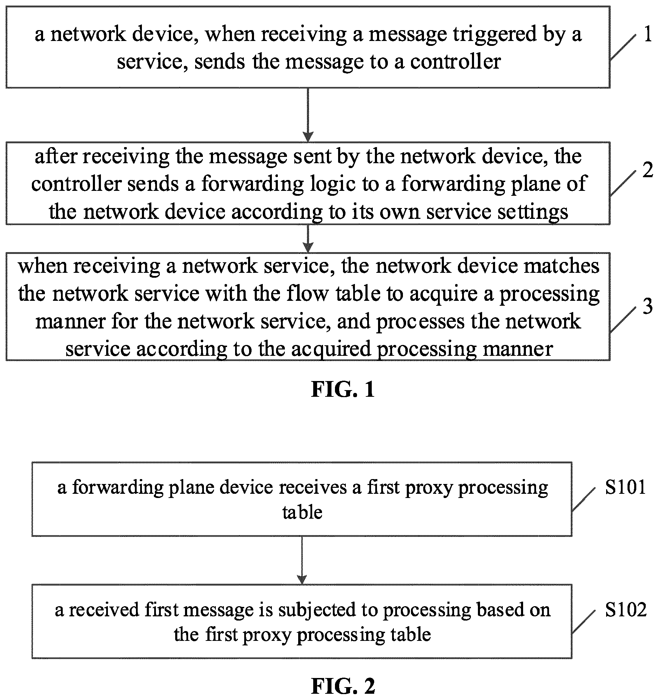

In related art, a flow diagram of a message processing method in SDN is shown in Fig. 1. A network device, when receiving a message triggered by a service, sends the message to a controller (step 1) to request the controller to indicate a processing manner for the message by the network device. The message at least includes: an Address Resolution Protocol (ARP) message, an Internet Control Message Protocol (ICMP) message, a Dynamic Host Configuration Protocol (DHCP) message, a broadcast protocol request message or multicast protocol request message, etc. After receiving the message sent by the network device, the controller sends a forwarding logic to a forwarding plane of the network device according to its own service settings (step 2). Herein, the forwarding logic is carried in a plurality of flow tables of the network device, and the flow tables at least include matching fields, instruction sets, and so on. When receiving a network service, the network device matches the network service with the flow table to acquire a processing manner for the network service, and processes the network service according to the acquired processing manner (step 3), so as to realize the network service function.

According to the message processing flow shown in Fig. 1, with the expansion of network scale and the increase of network service demand, the controller will receive a large number of proxy processing messages. Due to the limited processing capacity of the controller, when the number of proxy processing messages is too large which results in congestion in the processing capacity of the controller, the processing efficiency of the network service is reduced.

### SUMMARY

In view of this, embodiments of the present invention expect to provide a message processing method, an apparatus, and a storage medium, which can reduce the amount of message processed by the controller and improve the processing efficiency of network services.

To achieve the foregoing objective, the technical schemes according to embodiments of the present invention are implemented as follows.

A message processing method is provided according to embodiments of the present invention, which includes:
receiving, by a forwarding plane device, a first proxy processing table, the first proxy processing table being configured for indicating a processing manner for a first type of message by the forwarding plane device;
processing a received first message based on the first proxy processing table.

In the above scheme, before the receiving, by a forwarding plane device, a first proxy processing table, the method further includes:
receiving, by the forwarding plane device, a second message of the first type;
sending the second message to a control plane device.

In the above scheme, the processing a received first message based on the first proxy processing table includes:
acquiring a type of the first message;
matching a message type that is identical to the type of the first message in the first proxy processing table;
in response to a matching result being yes, processing the first message based on the processing manner corresponding to the message type acquired by matching.

In the above scheme, the processing a received first message based on the first proxy processing table includes:
acquiring a type of the first message;
matching a message type that is identical to the type of the first message in the first proxy processing table;
in response to a matching result being no, forwarding the first message to the control plane device.

In the above scheme, the method further includes:
receiving, by the forwarding plane device, a second proxy processing table;
updating the first proxy processing table by using the second proxy processing table.

A message processing method is provided according to embodiments of the present invention, which includes:
constructing, by a control plane device, a first proxy processing table based on a first type of message and a processing manner for the first type of message;
sending the first proxy processing table to a forwarding plane device.

In the above scheme, before the constructing, by a control plane device, a first proxy processing table based on a first type of message and a processing manner for the first type of message, the method further includes:
receiving, by the control plane device, a second message of the first type sent by the forwarding plane device.

In the above scheme, the constructing, by a control plane device, a first proxy processing table based on a first type of message and a processing manner for the first type of message includes:
parsing, by the control plane device, the second message to acquire the first type corresponding to the second message and the processing manner for the first type of message;
establishing a first corresponding relationship between the first type of message and the processing manner for the first type of message;
storing the first corresponding relationship into the first proxy processing table.

In the above scheme, after the sending the first proxy processing table to a forwarding plane device, the method further includes:
receiving, by the control plane device, a first message sent by the forwarding plane device, there being no message type that is identical to the type of the first message in the first proxy processing table;
parsing the first message, to acquire a second type corresponding to the first message and a processing manner for the second type of message;
establishing a second corresponding relationship between the second type of message and the processing manner for the second type of message;
storing the second corresponding relationship into a second proxy processing table.

In the above scheme, the method further includes:
sending, by the control plane device, the second proxy processing table to the forwarding plane device.

A message processing apparatus is provided according to embodiments of the present invention, which includes:
a first receiving module, which is configured for receiving a first proxy processing table, the first proxy processing table being configured for indicating a processing manner for a first type of message by a forwarding plane device;
a processing module, which is configured for processing a received first message based on the first proxy processing table.
In the above scheme, the first receiving module is further configured for receiving a second message of the first type;
accordingly, the apparatus further includes:
   a first sending module, which is configured for sending the second message to a control plane device.

In the above scheme, the processing module is specifically configured for:
acquiring a type of the first message;
matching a message type that is identical to the type of the first message in the first proxy processing table;
in response to a matching result being yes, processing the first message based on the processing manner corresponding to the message type acquired by matching.

In the above scheme, the processing module is configured for:
acquiring a type of the first message;
matching a message type that is identical to the type of the first message in the first proxy processing table;
in response to a matching result being no, forwarding the first message to the control plane device.

In the above scheme, the first receiving module is further configured for receiving a second proxy processing table;
the processing module is further configured for updating the first proxy processing table by using the second proxy processing table.

A message processing apparatus is provided according to embodiments of the present invention, which includes:
a constructing module, which is configured for constructing a first proxy processing table based on a first type of message and a processing manner for the first type of message;
a second sending module, which is configured for sending the first proxy processing table to a forwarding plane device.

In the above scheme, the apparatus further includes:
a second receiving module, which is configured for receiving a second message of the first type sent by the forwarding plane device.

In the above scheme, the constructing module is configured for:
parsing the second message to acquire the first type corresponding to the second message and the processing manner for the first type of message;
establishing a first corresponding relationship between the first type of message and the processing manner for the first type of message;
storing the first corresponding relationship into the first proxy processing table.

In the above scheme, the second receiving module is further configured for: receiving a first message sent by the forwarding plane device, there being no message type that is identical to the type of the first message in the first proxy processing table;
the constructing module is further configured for:
parsing the first message, to acquire a second type corresponding to the first message and a processing manner for the second type of message;
establishing a second corresponding relationship between the second type of message and the processing manner for the second type of message;
storing the second corresponding relationship into a second proxy processing table.

In the above scheme, the second sending module is further configured for sending the second proxy processing table to the forwarding plane device.

A message processing apparatus is provided according to embodiments of the present invention, which includes:
a processor, and a memory configured for storing a computer program runnable on the processor;
wherein, the processor is configured for, when running the computer program, performing steps of the above methods.

A storage medium is provided according to embodiments of the present invention, which has a computer program stored thereon, the computer program, when executed by a processor, implements steps of the above methods.

A message processing method, apparatus, and storage medium are provided according to embodiments of the present invention. A control plane device constructs a first proxy processing table based on a first type of message and a processing manner for the first type of message, and sends the first proxy processing table to a forwarding plane device, the first proxy processing table is configured for indicating a processing manner for the first type of message by the forwarding plane device. The forwarding plane device receives the first proxy processing table, and processes a received first message based on the first proxy processing table. In this way, the forwarding plane device acquires a processing manner for a specific type of message, so that when the type of a received message matches with a message type in the first proxy processing table, the forwarding plane device can process the received message based on the message processing manner recorded in the proxy processing table. There is no need for the forwarding plane device to forward the received message to the control plane device for processing, which relieves the processing pressure of the control plane device, improves the processing speed of the control plane device, and thus improves the processing efficiency of the network service.

### BRIEF DESCRIPTION OF DRAWINGS

Fig. 1 is a flow diagram of a message processing method in SDN in related art;
Fig. 2 is a processing flow diagram of a message processing method according to embodiment one of the present invention;
Fig. 3 is a flow diagram of processing, by a forwarding plane device, a received first message based on a first proxy processing table according to an embodiment of the present invention;
Fig. 4 is a processing flow diagram of the message processing method according to embodiment two of the present invention;
Fig. 5 is a processing flow diagram of the message processing method according to embodiment three of the present invention;
Fig. 6 is a processing flow diagram of the message processing method according to embodiment four of the present invention;
Fig. 7 is a processing flow diagram of the message processing method according to embodiment five of the present invention;
Fig. 8 is a processing flow diagram of constructing, by a control plane device, the first proxy processing table based on a first type of message and a processing manner for the first type of message according to an embodiment of the present invention;
Fig. 9 is a processing flow diagram of the message processing method according to embodiment six of the present invention;
Fig. 10 is a processing flow diagram of the message processing method according to embodiment seven of the present invention;
Fig. 11 is a processing flow diagram of the message processing method according to embodiment eight of the present invention;
Fig. 12 is a processing flow diagram of the message processing method according to embodiment nine of the present invention;
Fig. 13 is a processing flow diagram of the message processing method according to embodiment ten of the present invention;
Fig. 14 is structural schematic diagram of a message processing apparatus according to embodiment eleven of the present invention;
Fig. 15 is a structural schematic diagram of the message processing apparatus according to embodiment twelve of the present invention;
Fig. 16 is a schematic diagram of hardware structure of the message processing apparatus according to an embodiment of the present invention.

### DETAILED DESCRIPTION

In order to understand the features and technical content of the embodiments of the present invention in more detail, the implementation of the embodiments of the present invention will be described in detail below with reference to the accompanying drawings. The accompanying drawings are for reference and description purposes only, and are not for limiting the present invention.

### Embodiment one

As shown in Fig. 2, a processing flow of a message processing method provided in embodiment one of the present invention includes the following steps.

At step S101, a forwarding plane device receives a first proxy processing table.

Herein, the first proxy processing table at least includes a proxy reply table and a proxy forwarding table according to a type of message; the first proxy processing table is sent by a control plane device, and the first proxy processing table is configured to indicate a processing manner for a first type of message. The forwarding plane device may also receive processing manners for various types of messages sent by the control plane device.

It can be understood that the forwarding plane device needs to perform different processing procedures for different types of messages. For example, for an ARP request message, a DHCP request message and an ICMP request message, the forwarding plane device may make a proxy reply according to the first proxy processing table; for the ARP request message, the DHCP request message and the ICMP request message, the contents of proxy reply by the forwarding plane device are also different. For a broadcast request message or a multicast request message, the forwarding plane device may make a proxy forwarding according to the first proxy processing table; for the broadcast request message and the multicast request message, the contents of proxy forward by the forwarding plane device are also different.

At step S102, a received first message is subjected to processing based on the first proxy processing table.

Herein, the processing includes at least: proxy forwarding or proxy reply.

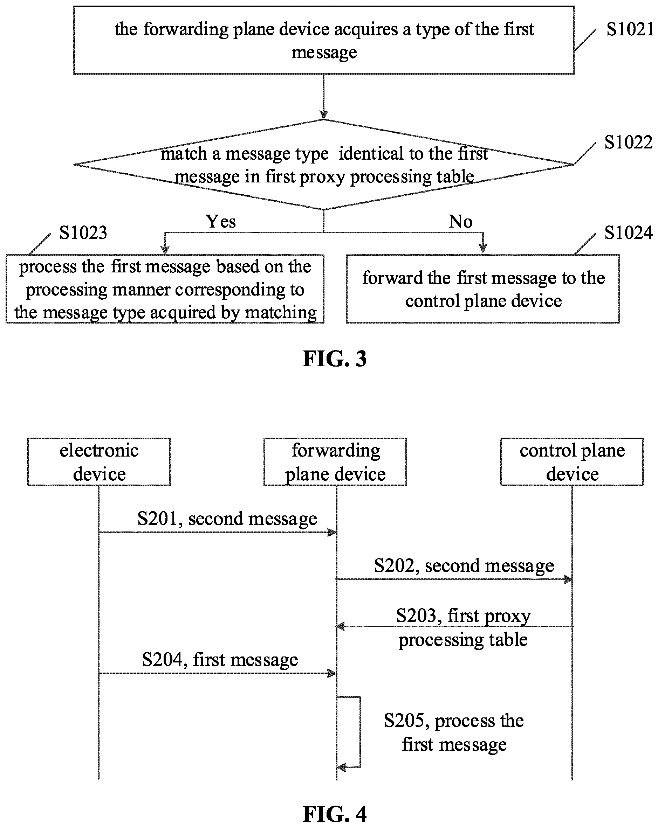

In an alternative embodiment, the specific procedures of processing, by the forwarding plane device, the received first message based on the first proxy processing table, as shown in Fig. 3, includes the following steps.

At step S1021, the forwarding plane device acquires a type of the first message.

Herein, the forwarding plane device acquires the type of the first message according to the received first message.

Herein, the type of the first message at least includes: an ARP request message, a DHCP request message, an ICMP request message, a multicast request message, a relay request message, etc.

At step S 1022, a message type that is identical to the type of the first message is matched in the first proxy processing table; when the matching result is yes, step S1023 is executed; and when the matching result is no, step S1024 is executed.

In an alternative embodiment, the forwarding plane device searches for a message type that is identical to the type of the first message in the first proxy processing table.

At step S1023, the first message is processed based on the processing manner corresponding to the message type acquired by matching.

When the message type that is identical to the type of the first message in the first proxy processing table is found, the forwarding plane device processes the first message according to the processing manner corresponding to the message type recorded in the first proxy processing table.

Herein, by matching with the first proxy processing table acquired by itself, the forwarding plane device can directly process the received first message according to the processing manner recorded in the first proxy processing table, without the need to report the first message to the control plane device for processing, which relieves the processing pressure of the control plane device, improves the processing speed of the control plane device, and thus improves the processing efficiency of the network service.

At step S 1024, the first message is forwarded to the control plane device.

Herein, since the forwarding plane device does not match the message type that is identical to the type of the first message in the first proxy processing table acquired by itself, that is, the processing manner for the first message by the forwarding device is not recorded in the first proxy processing table, the forwarding plane device needs to send the first message to the control plane device, which will process the first message.

### Embodiment two

As shown in Fig. 4, a processing flow of a message processing method provided in embodiment two of the present invention includes the following steps.

At step S201, a forwarding plane device receives a second message sent by an electronic device.

Herein, the second message is a message of a first type.

At step S202, the forwarding plane device sends the second message to a control plane device.

At step S203, the forwarding plane device receives a first proxy processing table.

Herein, the forwarding plane device receives the first proxy processing table sent by the control plane device; the first proxy processing table is constructed by the control plane device based on information such as a type of the second message and a processing manner corresponding to the type of the second message, etc.

At step S204, the forwarding plane device receives a first message sent by the electronic device.

At step S205, the forwarding plane device processes the first message based on the first proxy processing table.

Herein, the processing procedure of the first message by the forwarding plane device is the same as that of step S 102 in embodiment one, and will not be repeated here.

### Embodiment three

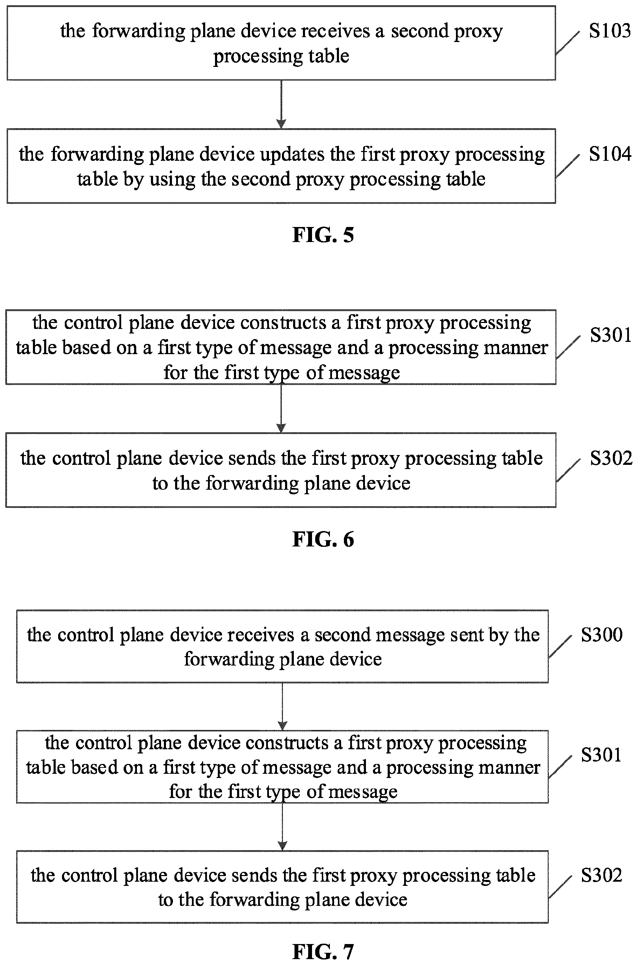

A processing flow of a message processing method provided in embodiment three of the present invention is shown in Fig. 5. The processing flow of the message processing method provided in embodiment three of the present invention is similar to the above-mentioned embodiment one and embodiment two, except that after step S102 or after step S205, it further includes the following steps.

At step S103, the forwarding plane device receives a second proxy processing table.

Herein, the forwarding plane device receives the second proxy processing table sent by the control plane device, where the first proxy processing table is different from the message type recorded in the first proxy processing table; or the processing manner recorded in the second proxy processing table is different from that recorded in the first proxy processing table for the identical type of message.

At step S104, the forwarding plane device updates the first proxy processing table by using the second proxy processing table.

In an alternative embodiment, the forwarding plane device adds the message type and the corresponding processing manner recorded in the second proxy processing table to the first proxy processing table.

In another alternative embodiment, the forwarding plane device updates, by using the processing manner corresponding to the message type recorded in the second proxy processing table, the processing manner corresponding to the identical message type recorded in the first proxy processing table.

### Embodiment four

As shown in Fig. 6, a processing flow of a message processing method provided in embodiment four of the present invention includes the following steps.

At step S301, the control plane device constructs a first proxy processing table based on a first type of message and a processing manner for the first type of message.

In an embodiment, since a field value of a specific type of message such as a multicast request message or a broadcast request message may be acquired in advance, and the field value of the message is fixed, that is, the control plane device does not need to acquire the field value of the message through a message sent by a forwarding plane device, the control plane device establishes a first corresponding relationship between the pre-acquired first type of message and the processing manner for the first type of message, and stores the first corresponding relationship into the first proxy processing table to realize the construction of the first proxy processing table.

At step S302, the control plane device sends the first proxy processing table to the forwarding plane device.

### Embodiment five

Since a key field value of a specific type of message such as an ARP request message, a DHCP request message or an ICMP request message cannot be acquired in advance, and the field value of the message is not fixed, the control plane device needs to parse a message sent by the forwarding plane device to get the key field value of the message, so as to acquire the type of the message and the corresponding processing manner of the message.

Based on this, a processing flow of the message processing method provided in embodiment five of the present invention is shown in Fig. 7. The message processing method provided in embodiment five of the present invention is similar to the message processing method provided in embodiment four of the present invention, except that before step S301, it further includes step S300.

At step S300, the control plane device receives a second message sent by the forwarding plane device.

The second message is a message of a first type.

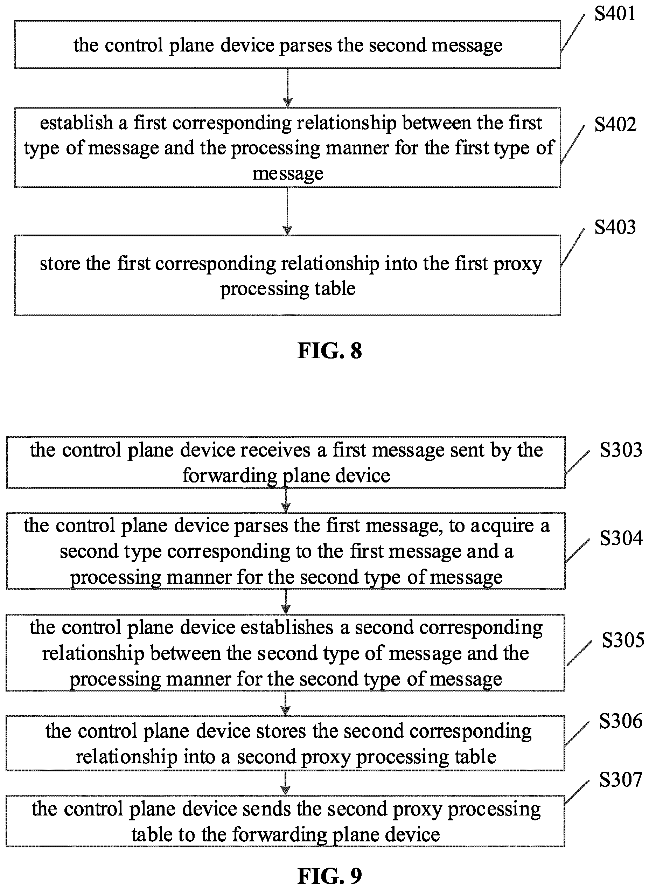

Accordingly, the processing procedure of constructing, by the control plane device, the first proxy processing table based on the first type of message and the processing manner for the first type of message, as shown in Fig. 8, includes the following steps.

At step S401, the control plane device parses the second message.

Herein, the control plane device acquires, by parsing the second message, a key field value of the second message, and the first type corresponding to the second message and the processing manner for the first type of message.

At step S402, a first corresponding relationship between the first type of message and the processing manner for the first type of message is established.

Herein, the control plane device establishes the first corresponding relationship according to the first type of message and the processing manner for the first type of message.

At step S403, the first corresponding relationship is stored into the first proxy processing table.

Herein, the control plane device stores the established first corresponding relationship into the first proxy processing table.

### Embodiment six

A processing flow of a message processing method provided in embodiment six of the present invention is shown in Fig. 9. The processing flow of the message processing method provided in embodiment six of the present invention is similar to the above-mentioned embodiment four and embodiment five, except that after step S302, it further includes the following steps.

At step S303, the control plane device receives a first message sent by the forwarding plane device.

In an embodiment, the forwarding plane device receives the first message sent by an electronic device, matches the first message with the first proxy processing table stored by itself, and sends the first message to the control plane device after determining that there is no message type that is identical to the type of the first message in the first proxy processing table.

At step S304, the control plane device parses the first message, to acquire a second type corresponding to the first message and a processing manner for the second type of message.

At step S305, the control plane device establishes a second corresponding relationship between the second type of message and the processing manner for the second type of message.

At step S306, the control plane device stores the second corresponding relationship into a second proxy processing table.

At step S307, the control plane device sends the second proxy processing table to the forwarding plane device.

Herein, the control plane device sends the second proxy processing table to the forwarding plane device, so that the forwarding plane device acquires the processing manner for the second type of message recorded in the second proxy processing table.

### Embodiment seven

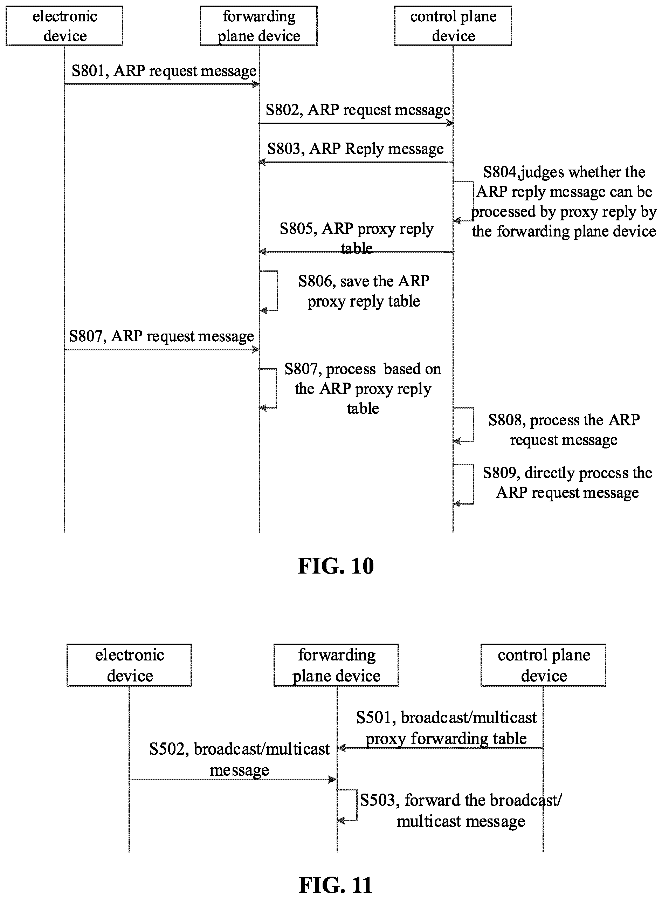

Taking a forwarding plane device receiving an ARP request message sent by an electronic device as an example, the processing flow of the message processing method in embodiment seven of the present invention, as shown in Fig. 10, includes the following steps.

At step S801, the forwarding plane device receives the ARP request message sent by the electronic device for the first time.

Herein, the forwarding plane device may be an OpenFlow device, and the electronic device may be a host attached to the forwarding plane device, or another forwarding plane device adjacent to the forwarding plane device.

At this time, since the forwarding plane device receives the ARP request message sent by the electronic device for the first time, the forwarding plane device will execute step S402 according to the existing implementation in the existing SDN networking scenario.

At step S802, the forwarding plane device sends the ARP request message to a control plane device.

At step S803, the control plane device sends an ARP reply message to the forwarding plane device.

In an embodiment of the present invention, after receiving the ARP request message sent by the forwarding plane device, the control plane device parses the ARP request message, and sends the ARP reply message to the forwarding plane device according to a destination IP address information in the ARP request message.

At step S804, the control plane device judges whether the ARP reply message may be processed by proxy reply by the forwarding plane device. If the judgment result is yes, step S805 is executed; and if the judgment result is no, step S809 is executed.

Herein, if the ARP reply message is a free ARP message or an ARP probe message, it is determined that the ARP reply message may not be processed by proxy reply by the forwarding plane device.

The free ARP message is used by the electronic device to determine whether the IP address currently used is in use by other electronic devicees. The process of determining, by the electronic device, whether the currently used IP address is in use by other electronic devicees is that: the electronic device sends a free ARP message to the forwarding plane device, if no response to the free ARP message is received, it indicates that the IP address currently used by the electronic device does not conflict with the IP addresses used by other electronic devicees; on the contrary, if the electronic device receives a response corresponding to the free ARP message, it indicates that the IP address currently used by the electronic device conflicts with the IP addresses used by other electronic devicees. When the IP address currently used by the electronic device conflicts with the IP addresses used by other electronic devicees and the IP address currently used by the electronic device has become effective, the electronic device will notify the network device that the IP address has been occupied.

The ARP probe message is used to detect, by an electronic device, whether an IP address has been used before the electronic device uses the IP address; if the IP address is not used, the electronic device will use the IP address; and if the IP address has been used, the electronic device will request the server to assign another IP address.

The forwarding plane device can only know the usage of part of the ARP in the whole SDN network. However, it needs to refer to the usage of the whole ARP in the network when responding to the free ARP message and the ARP probe message. Therefore, the forwarding plane device cannot make proxy reply to the free ARP message and the ARP probe message for the control plane device, and the control plane device needs to respond to the free ARP message and the ARP probe message based on the usage of ARP in the whole SDN network.

At step S805, the control plane device sends the ARP proxy reply table to the forwarding plane device.

In a specific embodiment, the control plane device encapsulates the ARP proxy reply table according to the destination IP address information in the ARP request message, the flow table number and the flow table format agreed by the control plane device and the forwarding plane device in advance, and sends the encapsulated ARP proxy reply table to the forwarding plane device.

At step S806, the forwarding plane device receives and saves the ARP proxy reply table.

The forwarding plane device receives the ARP proxy reply table sent by the control plane device, which has no jumping relationship with any other tables stored by the forwarding plane device itself. That is to say, for the forwarding plane device, the ARP proxy reply table is a separate table.

At step S807, when receiving the ARP request message again, the forwarding plane device processes it based on the ARP proxy reply table.

In a specific embodiment, when receiving the ARP request message again, the forwarding plane device parses the ARP request message to acquire at least source IP address information and destination IP address information in the ARP request message. When the acquired source IP address information and destination IP address information are consistent with the corresponding information in the ARP proxy reply table, the forwarding plane device encapsulates and responds to the ARP reply message according to the information in the ARP proxy reply table. When the acquired source IP address information or destination IP address information is inconsistent with the corresponding information in the ARP proxy reply table, the forwarding plane device sends the ARP request message to the control plane device.

At step S808, the control plane device processes the ARP request message.

In an embodiment, when the forwarding plane device sends the ARP request message to the control plane device due to the fact that the destination IP address information in the ARP request message is inconsistent with the corresponding information in the ARP proxy reply table, the control plane device sends a proxy reply table with new destination IP address information to the forwarding plane device.

In another embodiment, when the forwarding plane device sends the ARP request message to the control plane device due to the fact that the source IP address information in the ARP request message is inconsistent with the corresponding information in the ARP proxy reply table, the control plane device needs to encapsulate the ARP reply message and send a new ARP proxy reply table to the forwarding plane device.

Therefore, when the forwarding plane device has stored ARP proxy reply table and sends the ARP request message to the control plane device, the forwarding plane device needs to explain the specific reason for sending the ARP request message during sending the ARP request message to the control plane device, so that the control plane device can process the ARP request message accordingly.

At step S809, the control plane device directly processes the ARP request message.

It can be understood that when the control plane device receives a free ARP message or an ARP probe message sent by the forwarding plane device, the control plane device directly processes it, and does not execute the proxy reply process through the forwarding plane device.

In related art, after receiving the ARP request message sent by the host, the forwarding plane device, such as an OpenFlow device, will send the received ARP request message to the control plane device, and the control plane device will conduct unified learning and proxy reply processing. As a result, for large-scale networking or service superposition scenarios, the service volume of ARP request messages processed by the control plane device is large; or when the control plane device is not online, the ARP request message sent by the electronic device (host or forwarding plane device) cannot be parsed. According to the message processing method of the embodiment of the present invention, part of ARP proxy reply functions of the control plane device are moved down to the forwarding plane device, so that the processing pressure of the control plane device on ARP request messages is reduced, improving the processing speed of ARP request messages and the stability of the whole network.

### Embodiment eight

Taking a forwarding plane device receiving a broadcast/multicast message sent by an electronic device as an example, a processing flow of a message processing method in embodiment eight of the present invention, as shown in Fig. 11, includes the following steps.

At step S501, a control plane device sends a broadcast/multicast proxy forwarding table to a forwarding plane device in advance.

In an embodiment of the present invention, the control plane device sends the corresponding broadcast/multicast proxy forwarding table to the forwarding plane device according to different broadcast domains in the network.

For SDN networking scenario, there are two types of ports for broadcast/multicast message to enter the forwarding plane device, namely a fabric port and an access port. Herein, the fabric port is a tunnel port connecting adjacent forwarding plane devicees, and the access port is a port of a host attached to the forwarding plane device. For the fabric port and the access port, the control plane device sends a proxy forwarding table respectively; that is to say, the control plane device sends two proxy forwarding tables to the forwarding plane device, and the two forwarding tables correspond to the fabric port and the access port, respectively. Moreover, both the two proxy forwarding tables are sent to destination media access control (MAC) tables of the forwarding plane device, and the use of the broadcast/multicast proxy forwarding table is triggered by the pipeline. The destination MAC of the two broadcast/multicast proxy forwarding tables in the same broadcast domain are both 01:00:00:00:00. The broadcast/multicast proxy forwarding table can match all broadcast/multicast messages, and the forwarding plane device matches the broadcast/multicast message based on the specific port type and broadcast domain value.

At step S502, the forwarding plane device receives the broadcast/multicast message sent by the electronic device.

In an embodiment of the present invention, the forwarding plane device receives the broadcast/multicast message sent by the host attached to the local side of the forwarding plane device, or the forwarding plane device receives the broadcast/multicast message sent by an adjacent forwarding plane device.

At step S503, the forwarding plane device forwards the broadcast/multicast message based on the stored proxy forwarding table.

In an embodiment of the present invention, since the use of the proxy forwarding table is triggered by the pipeline, after receiving the broadcast/multicast message sent by the electronic device, the forwarding plane device judges whether an ingress port type of the broadcast/multicast message, which reaches the destination MAC of the forwarding plane device according to the pipeline flow of the flow table, is an access port or a fabric port.

When the ingress port type of the broadcast/multicast message is the access port, the forwarding plane device matches the pre-stored broadcast/multicast proxy forwarding table corresponding to the access port type according to the port type, the broadcast domain value and the destination MAC address; and forwards the broadcast/multicast message according to the matching processing flow. Taking the processing flow in the broadcast/multicast proxy forwarding table as a group table in which egress ports are all access ports and fabric ports related to the broadcast domain value on the forwarding plane device as an example, the forwarding plane device forwards the broadcast/multicast message to all ports except the access ports which receive the broadcast/multicast message from the broadcast/multicast proxy forwarding table, so as to complete the proxy forwarding process of the broadcast/multicast message, the ingress ports of which are access ports.

When the ingress port type of the broadcast/multicast message is the fabric port, the forwarding plane device matches the pre-stored broadcast/multicast proxy forwarding table corresponding to the fabric port type according to the port type, the broadcast domain value and the destination MAC address; and forwards the broadcast/multicast message according to the matching processing flow. Taking the processing flow in the broadcast/multicast proxy forwarding table as a group table in which egress ports are all access ports related to the broadcast domain value on the forwarding plane device as an example, the forwarding plane device forwards the broadcast/multicast message to the ports with access port type in the broadcast/multicast proxy forwarding table, so as to complete the proxy forward process of broadcast/multicast message, the ingress ports of which are fabric ports.

In related art, for the SDN networking scenario, after receiving the broadcast/multicast message, the forwarding plane device forwards it according to the pipeline process of the flow table. When forwarding to the destination MAC table of the forwarding plane device, since the destination MAC table usually only sends the destination MAC table of the host that existed in real time, it will often fails to match and the broadcast/multicast message will be sent to the controller. The controller inquires the broadcast domain to which the broadcast/multicast message belongs according to the sending port of the broadcast/multicast message, and then broadcasts or multicasts the broadcast/multicast message from the port of the broadcast domain. According to the message processing method of the embodiment of the present invention, the proxy forwarding function of the broadcast/multicast message of the control plane device is moved down to the forwarding plane device, so that the processing pressure of the control plane device on the broadcast/multicast message is reduced, improving the processing speed of the broadcast/multicast message and the stability of the whole network.

### Embodiment nine

In the SDN networking scenario, when a host attached to the forwarding plane device is online, the host needs to make DHCP message interaction with the control plane device to acquire the IP address. When the control plane device is a controller, the controller acts as a HDCP server; the host broadcasts a DHCP discover message to the forwarding plane device, and the forwarding plane device matches a DHCP basic flow table sent by the controller to the forwarding plane device in advance based on the DHCP discover message, and sends the DHCP discover message to the controller. The controller receives and parses the DHCP discover message and selects an IP address from the IP addresses that have not been leased and assigns it to the host. At the same time, the controller sends a DHCP offer message containing a leased IP address and other settings to the forwarding plane device; the forwarding plane device forwards the DHCP offer message to the corresponding attached host according to the basic forwarding flow table. When multiple controllers respond to the host with the DHCP offer message at the same time, the host only accepts the first received DHCP offer message and replies a DHCP request message in the form of broadcast. The DHCP request message contains the content of requesting IP address from the selected controller. By replying the DHCP request message in the form of broadcast, the host notifies all controllers of its selected controller corresponding to IP address. After receiving the DHCP request message, the forwarding plane device matches it with the DHCP basic flow table and sends the DHCP request message to the controller. The controller receives and parses the DHCP request message, and sends a message containing an IP address and a DHCP ack message provided by the controller to the forwarding plane device to notify the host that the IP address provided by the controller may be used. After receiving the DHCP ack message, the forwarding plane device sends the DHCP ack message to the host attached to the forwarding plane device, and the host binds its own TCP/IP protocol with the network card. Except for the controller selected by the host, all other controllers will take back the IP address once provided.

The above process is a basic implementation process for the host to acquire an IP address in the SDN networking scenario. Generally, there is a lease term for the IP address leased by the controller to the host, and the controller needs to take back the leased IP address when the term expires. If the host would like to continue to use the IP address and extend the lease term of the IP address, the IP lease term needs to be updated. That is, when the host uses an IP address for half of the lease term of the IP address, the host actively sends a lease renewal message to the controller. The lease renewal message is still encapsulated in the DHCP request message and sent to the controller after matching with the DHCP basic flow table in the forwarding plane device. The controller updates the lease time of the IP address, encapsulates it in the DHCP ack message, and forwards it to the corresponding attached host through the forwarding plane device to complete the lease renewal process.

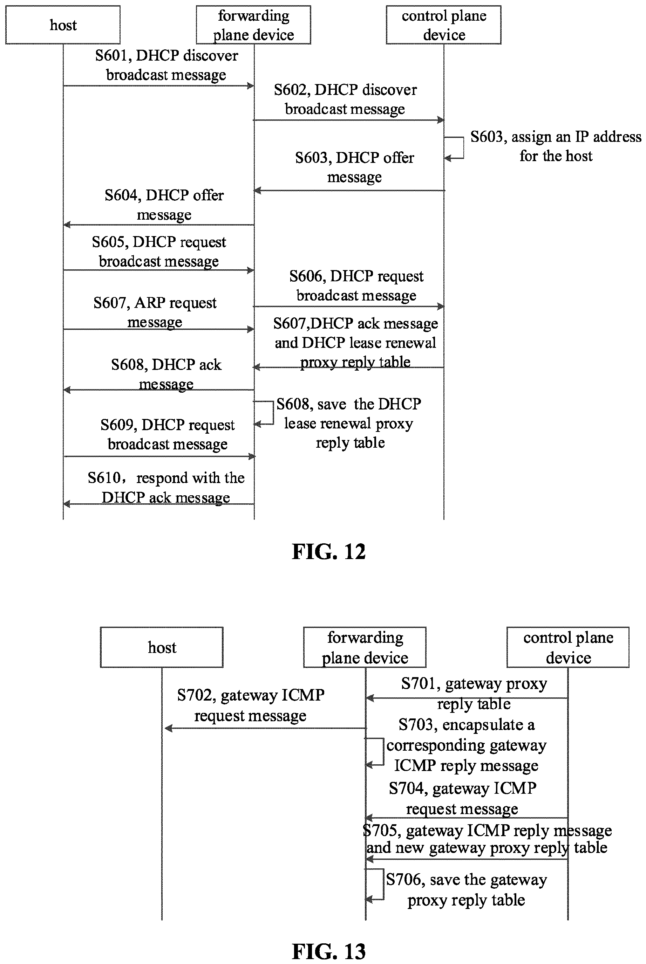

Taking a forwarding plane device receiving a DHCP lease renewal request message sent by a host as an example, a processing flow of a message processing method in embodiment nine of the present invention, as shown in Fig. 12, includes the following steps.

At step S601, a forwarding plane device receives a DHCP discover broadcast message sent by a host for the first time.

Herein, the forwarding plane device receives the DHCP discover broadcast message sent by the host attached to the forwarding plane device for the first time, or the forwarding plane device receives the DHCP discover broadcast message sent by an adjacent forwarding plane device for the first time.

At step S602, the forwarding plane device sends the DHCP discover broadcast message to a control plane device.

In an embodiment, the control plane device sends a DHCP basic flow table to the forwarding plane device in advance. After receiving the DHCP discover broadcast message, the forwarding plane device matches the DHCP discover broadcast message with the DHCP basic flow table, and sends the DHCP discover broadcast message to the control plane device for processing based on the matching result.

At step S603, the control plane device assigns an IP address for the host and sends a DHCP offer message to the forwarding plane device.

In an embodiment, after receiving the DHCP discover broadcast message sent by the forwarding plane device, the control plane device parses and processes the DHCP discover broadcast message, selects an IP address from the IP addresses that have not been leased and sends it to the host, and sends a DHCP offer message containing a leased IP address and other related settings to the forwarding plane device.

At step S604, the forwarding plane device receives the DHCP offer message and forwards the DHCP offer message to the host.

At step S605, the host sends a DHCP request broadcast message to the forwarding plane device.

Herein, the DHCP request broadcast message contains a content that the host requests an IP address from the control plane device.

At step S606, the forwarding plane device matches the DHCP request broadcast message with the pre-stored basic flow table, and sends the DHCP request broadcast message to the control plane device according to the matching result.

At step S607, the control plane device sends a DHCP ack message and a DHCP lease renewal proxy reply table to the forwarding plane device.

In an embodiment of the present invention, the control plane device receives and parses the DHCP request broadcast message, and sends the DHCP ack message containing the IP address and related settings provided by the control plane device to the forwarding plane device, so as to make the host know the IP address that the host may use. Based on the source MAC address of the host and the IP address information assigned to the host, the control plane device encapsulates a new DHCP lease renewal proxy reply table according to the flow table number and flow table format agreed with the forwarding plane device in advance, and sends the DHCP lease renewal proxy reply table to the forwarding plane device.

At step S608, the forwarding plane device forwards the DHCP ack message to the host, and saves the DHCP lease renewal proxy reply table locally.

At step S609, the forwarding plane device receives the DHCP request broadcast message sent by the host again, and matches the DHCP request broadcast message with the DHCP lease renewal proxy reply table; if the matching result is yes, step S610 is executed; if the matching result is no, step S606 is executed.

At step S610, the forwarding plane device responds with the DHCP ack message to complete the DHCP lease renewal proxy reply based on the matching of the DHCP lease renewal message with the DHCP lease renewal proxy reply table.

In an embodiment of the present invention, based on the matching of the DHCP lease renewal message with the DHCP lease renewal proxy reply table, the forwarding plane device performs the proxy reply processing according to the corresponding processing manner in the matched DHCP lease renewal proxy reply table, and encapsulates and responds with the DHCP ack message to complete the DHCP lease renewal proxy reply.

According to the message processing method of the embodiment of the present invention, the function of proxy reply to the DHCP lease renewal request message of the control plane device is moved down to the forwarding plane device, which reduces the processing pressure of the control plane device on the DHCP lease renewal request message, improves the processing speed of the broadcast/multicast message, and improves the stability of the whole network.

### Embodiment ten

For the SDN networking scenario, the basic service forwarding between the hosts attached to the forwarding plane device is realized through the basic forwarding table sent by the control plane device; in the case of no new host, the basic service forwarding between the original hosts does not need to be sent to the control plane device for processing, and can be implemented according to the basic forwarding table saved by the forwarding plane device. Even if there is a new host, it only needs to send a service request to the control plane device once, and the control plane device will send a new basic service forwarding table to the forwarding plane device, so that the forwarding plane device may complete the subsequent service forwarding process. Therefore, the basic service forwarding in ICMP process will not increase the processing pressure of the control plane device.

However, in the SDC networking scenario, the gateways of each network segment are uniformly configured in the control plane device, and the communication between the gateways is completed through proxy reply by the control plane device.

Taking a forwarding plane device receiving a gateway ICMP request message sent by a host as an example, a processing flow of a message processing method in embodiment ten of the present invention, as shown in Fig. 13, includes the following steps.

At step S701, a control plane device sends a gateway proxy reply table for the network segment attached to the forwarding plane device in advance.

In an embodiment, the control plane device acquires an information of the network segment attached to local side of the forwarding plane device according to the pre-configuration, and sends the gateway proxy reply table for the network segment attached to the local side of the device to the forwarding plane device in advance according to the flow table number and flow table format agreed with the forwarding plane device in advance. Each network segment corresponds to a gateway proxy reply table, and the matching fields in the proxy reply table are VRF and destination IP address information respectively. Herein, VRF field is used to distinguish different routes. In the existing network scenario, it is allowed to have the same network segment under different routes; the destination IP address refers to the gateway address of each network segment. In this way, the gateway request message sent by a certain network segment under a certain route may be matched.

At step S702, the forwarding plane device receives the gateway ICMP request message sent by the attached host and matches the gateway proxy reply table. If the matching result is yes, step S703 is executed; if the matching result is no, step S704 is executed.

At step S703, the forwarding plane device encapsulates a corresponding gateway ICMP reply message according to the gateway proxy reply table to complete the gateway proxy reply.

Herein, the forwarding plane device encapsulates the corresponding gateway ICMP reply message according to the requirements in the gateway reply table.

At step S704, the forwarding plane device sends the gateway ICMP request message to the control plane device.

At step S705, the control plane device encapsulates and responds with the relevant gateway ICMP reply message, and sends a new gateway proxy reply table.

In an embodiment, the control plane device receives and parses a gateway ICMP request message sent by the forwarding plane device, encapsulates and responds with the corresponding gateway ICMP reply message to complete the reply, and then encapsulates and sends a new gateway proxy reply table to the forwarding plane device according to the VRF and the destination IP address information in the gateway ICMP request message.

At step S706, the forwarding plane device receives and saves the gateway proxy reply table.

Herein, the gateway proxy reply table is used as the processing basis for the gateway ICMP request message received again by the forwarding plane device; that is, when the re-received gateway ICMP request message can match the gateway proxy reply table, step S703 is executed; if the re-received gateway ICMP request message cannot match the gateway proxy reply table, step S704 is executed.

According to the message processing method of the embodiment of the present invention, the function of gateway ICMP request message of control plane device is moved down to the forwarding plane device, which reduces the processing pressure of the gateway ICMP request message by the control plane device, improves the processing speed of the broadcast/multicast message, and improves the stability of the whole network.

It should be noted that the function of the control plane device according to the above embodiment of the present invention may be realized by the controller.

### Embodiment eleven

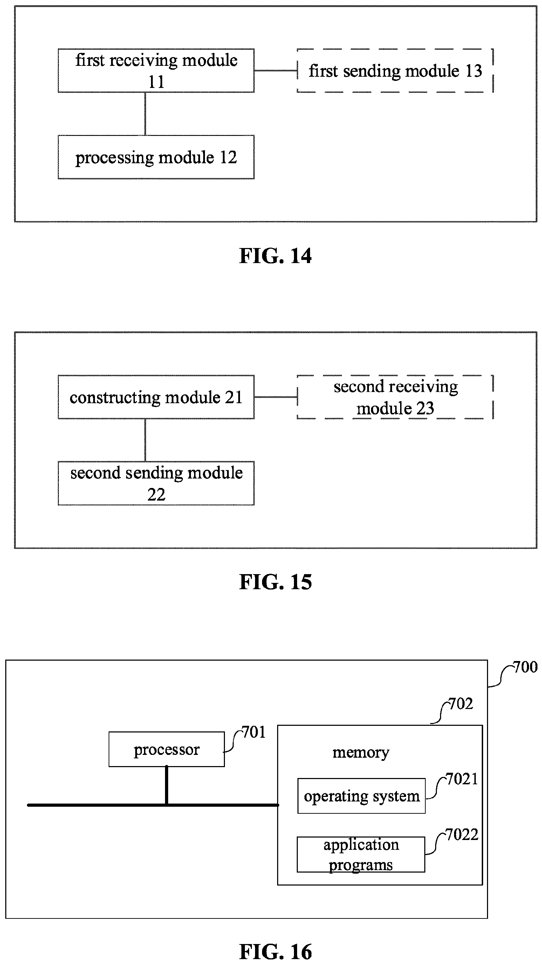

Based on the message processing method described above, a message processing apparatus is further provided according to embodiment eleven of the present invention, which includes, as shown in Fig. 14, a first receiving module 11 and a processing module 12.

The first receiving module 11 is configured for receiving a first proxy processing table indicating a processing manner for a first type of message by a forwarding plane device.

The processing module 12 is configured for processing a received first message based on the first proxy processing table.

In the above scheme, the first receiving module 11 is further configured for receiving a second message of the first type.

Accordingly, the apparatus further includes a first sending module 13 configured for sending the second message to a control plane device.

In the above scheme, the processing module 12 is specifically configured for acquiring a type of the first message;
matching a message type that is identical to the type of the first message in the first proxy processing table;
in response to a matching result being yes, processing the first message based on the processing manner corresponding to the message type acquired by matching.

In the above scheme, the processing module 12 is specifically configured for acquiring a type of the first message;
matching a message type that is identical to the type of the first message in the first proxy processing table;
in response to a matching result being no, forwarding the first message to the control plane device.

In the above scheme, the first receiving module 11 is further configured for receiving a second proxy processing table;
the processing module 12 is further configured for updating the first proxy processing table by using the second proxy processing table.

### Embodiment twelve

Based on the message processing method described above, a message processing apparatus is further provided according to embodiment twelve of the present invention, which, as shown in Fig. 15, includes:
a constructing module 21, which is configured for constructing a first proxy processing table based on a first type of message and a processing manner for the first type of message;
a second sending module 22, which is configured for sending the first proxy processing table to a forwarding plane device.

In the above scheme, the apparatus further includes:
a second receiving module 23, which is configured for receiving a second message of the first type sent by the forwarding plane device.

In the above scheme, the constructing module 21 is specifically configured for parsing the second message to acquire the first type corresponding to the second message and the processing manner for the first type of message;
establishing a first corresponding relationship between the first type of message and the processing manner for the first type of message;
storing the first corresponding relationship into the first proxy processing table.

In the above scheme, the second receiving module 23 is further configured for receiving a first message sent by the forwarding plane device, and there is no message type that is identical to the type of the first message in the first proxy processing table;
the constructing module 21 is further configured for parsing the first message, to acquire a second type corresponding to the first message and a processing manner for the second type of message;
establishing a second corresponding relationship between the second type of message and the processing manner for the second type of message; storing the second corresponding relationship into a second proxy processing table.

In the above scheme, the second sending module 22 is further configured for sending the second proxy processing table to the forwarding plane device.

In actual applications, the first receiving module 11, the processing module 12 and the first sending module 13 are all implementable by components in the forwarding plane device such as Central Processing Unit (CPU), Micro Processor Unit (MPU), Digital Signal Processor (DSP), or Field Programmable Gate Array (FPGA).

In actual applications, the constructing module 21, the second sending module 22 and the second receiving module 23 are all implementable by components in the forwarding plane device such as CPU, MPU, DSP, or FPGA. The control plane device may be a controller.

A message processing apparatus is further provided according to embodiments of the present invention, which, as shown in Fig. 16, includes: a processor 701, and a memory 702 configured for storing a computer program runnable on the processor 701.

In an embodiment, the processor 701 is configured for, when running the computer program, performing steps of:
receiving a first proxy processing table, the first proxy processing table being configured for indicating a processing manner for a first type of message by a forwarding plane device;
processing a received first message based on the first proxy processing table.

The processor 701 is configured for, when running the computer program, further performing steps of:
receiving a second message of the first type;
sending the second message to a control plane device.

The processor 701 is configured for, when running the computer program, further performing steps of: acquiring a type of the first message; matching a message type that is identical to the type of the first message in the first proxy processing table; in response to a matching result being yes, processing the first message based on the processing manner corresponding to the message type acquired by matching.

The processor 701 is configured for, when running the computer program, further performing steps of: acquiring a type of the first message; matching a message type that is identical to the type of the first message in the first proxy processing table; in response to a matching result being no, forwarding the first message to the control plane device.

The processor 701 is configured for, when running the computer program, further performing steps of: receiving a second proxy processing table;
updating the first proxy processing table by using the second proxy processing table.

In another embodiment, the processor 701 is configured for, when running the computer program, performing steps of: constructing a first proxy processing table based on a first type of message and a processing manner for the first type of message; sending the first proxy processing table to the forwarding plane device.

The processor 701 is configured for, when running the computer program, further performing a step of: receiving a second message of the first type sent by the forwarding plane device.

The processor 701 is configured for, when running the computer program, further performing steps of: parsing the second message to acquire the first type corresponding to the second message and the processing manner for the first type of message; establishing a first corresponding relationship between the first type of message and the processing manner for the first type of message; storing the first corresponding relationship into the first proxy processing table.

The processor 701 is configured for, when running the computer program, further performing steps of: receiving a first message sent by the forwarding plane device, there being no message type that is identical to the type of the first message in the first proxy processing table; parsing the first message, to acquire a second type corresponding to the first message and a processing manner for the second type of message; establishing a second corresponding relationship between the second type of message and the processing manner for the second type of message; storing the second corresponding relationship into a second proxy processing table.

The processor 701 is configured for, when running the computer program, further performing a step of: sending the second proxy processing table to the forwarding plane device.

It should be understood that the memory 702 may be a volatile memory or a nonvolatile memory, or may include both a volatile memory and a nonvolatile memory. The nonvolatile memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, an optical disc, or a Compact Disc Read-Only Memory (CD-ROM), the magnetic surface memory may be a disk memory or a tape memory. The volatile memory may be a Random Access Memory (RAM), which is used as an external cache. Illustratively but not restrictively, a plurality of forms of RAMs may be used, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a Sync Link Dynamic Random Access Memory (SLDRAM), and a Direct Rambus Random Access Memory (DRRAM). The memory 702 described in the embodiment of the present disclosure is intended to include, without being limited to, the above memories and any other suitable types of memories.

The memory 702 in the embodiment of the present invention is configured to store various types of data to support operation of the message processing apparatus 700. Examples of such data include all computer programs configured to be executed in the message processing apparatus 700, such as an operating system 7021 and application programs 7022. The operating system 7021 includes various system programs, such as a framework layer, a core library layer, and a driver layer, so as to implement various basic services and handle hardware-based tasks. The application programs 7022 may include various application programs, and the programs configured for implementing the methods according to the embodiments of the present disclosure may be included in the application programs 7022.

A storage medium is further provided according to embodiments of the present invention, which has a computer program stored thereon, the computer program, when running on a processor, causes to perform steps of:
receiving a first proxy processing table, the first proxy processing table being configured for indicating a processing manner for a first type of message by a forwarding plane device;
processing a received first message based on the first proxy processing table.

In an embodiment, the computer program, when running on the processor, further causes to perform steps of:
receiving a second message of the first type;
sending the second message to a control plane device.

In an embodiment, the computer program, when running on the processor, further causes to perform steps of:
acquiring a type of the first message;
matching a message type that is identical to the type of the first message in the first proxy processing table;
in response to a matching result being yes, processing the first message based on the processing manner corresponding to the message type acquired by matching.

In an embodiment, the computer program, when running on the processor, further causes to perform steps of:
acquiring a type of the first message;
matching a message type that is identical to the type of the first message in the first proxy processing table;
in response to a matching result being no, forwarding the first message to the control plane device.

In an embodiment, the computer program, when running on the processor, further causes to perform steps of: receiving a second proxy processing table; updating the first proxy processing table by using the second proxy processing table.

Another storage medium is further provided according to embodiments of the present invention, which has a computer program stored thereon, the computer program, when running on a processor, causes to perform steps of:
constructing a first proxy processing table based on a first type of message and a processing manner for the first type of message;
sending the first proxy processing table to the forwarding plane device.

In an embodiment, the computer program, when running on the processor, further causes to perform a step of: receiving a second message of the first type sent by the forwarding plane device.

In an embodiment, the computer program, when running on the processor, further causes to perform steps of: parsing the second message to acquire the first type corresponding to the second message and the processing manner for the first type of message; establishing a first corresponding relationship between the first type of message and the processing manner for the first type of message; storing the first corresponding relationship into the first proxy processing table.

In an embodiment, the computer program, when running on the processor, further causes to perform steps of:
receiving a first message sent by the forwarding plane device, there being no message type that is identical to the type of the first message in the first proxy processing table;
parsing the first message, to acquire a second type corresponding to the first message and a processing manner for the second type of message;
establishing a second corresponding relationship between the second type of message and the processing manner for the second type of message;
storing the second corresponding relationship into a second proxy processing table.

In an embodiment, the computer program, when running on the processor, further causes to perform a step of: sending the second proxy processing table to the forwarding plane device.

Those of ordinary skill in the art can understand that all or part of the operations of implementing the above method embodiments may be completed by using hardware related to program instructions, and the foregoing program may be stored in a computer readable storage medium, and the program is executed to perform the operations in the above method embodiments. The foregoing storage medium includes various media capable of storing program codes such as a mobile storage device, a Read-Only Memory (ROM), a Random Access Memory (RAM), a magnetic disk, or an optical disc.

Or, the integrated unit in the invention may be stored in a computer-readable storage medium if being implemented in the form of a software function module and sold or used as a standalone product. Based on such understanding, the essence of the technical solution of the embodiments of the disclosure or a part contributing to the related art may be embodied in the form of a software product that is stored in a storage medium, including a plurality of instructions used to cause a computer device (which may be a personal computer, a server, or a network device, etc.) to perform all or part of the methods described in various embodiments of the invention. The foregoing storage medium includes: various media capable of storing program codes, such as a mobile storage device, a ROM, a RAM, a magnetic disk, or an optical disc.

The above are only the preferred embodiments of the present invention and are not used to limit the protection scope of the present invention. Any modification, equivalent replacement and improvement made within the spirit and principle of the present invention shall be included in within the protection scope of the present invention.

## Claims

1. A message processing method, comprising:
receiving, by a forwarding plane device, a first proxy processing table, the first proxy processing table being configured for indicating a processing manner for a first type of message by the forwarding plane device;
processing a received first message based on the first proxy processing table.

2. The method of claim 1, wherein before the receiving, by a forwarding plane device, a first proxy processing table, the method further comprises:
receiving, by the forwarding plane device, a second message of the first type;
sending the second message to a control plane device.

3. The method of claim 2, wherein the processing a received first message based on the first proxy processing table comprises:
acquiring a type of the first message;
matching a message type that is identical to the type of the first message in the first proxy processing table;
in response to a matching result being yes, processing the first message based on the processing manner corresponding to the message type acquired by matching.

4. The method of claim 2, wherein the processing a received first message based on the first proxy processing table comprises:
acquiring a type of the first message;
matching a message type that is identical to the type of the first message in the first proxy processing table;
in response to a matching result being no, forwarding the first message to the control plane device.

5. The method of claim 4, further comprising:
receiving, by the forwarding plane device, a second proxy processing table;
updating the first proxy processing table by using the second proxy processing table.

6. A message processing method, comprising:
constructing, by a control plane device, a first proxy processing table based on a first type of message and a processing manner for the first type of message;
sending the first proxy processing table to a forwarding plane device.

7. The method of claim 6, wherein before the constructing, by a control plane device, a first proxy processing table based on a first type of message and a processing manner for the first type of message, the method further comprises:
receiving, by the control plane device, a second message of the first type sent by the forwarding plane device.

8. The method of claim 7, wherein the constructing, by a control plane device, a first proxy processing table based on a first type of message and a processing manner for the first type of message comprises:
parsing, by the control plane device, the second message to acquire the first type corresponding to the second message and the processing manner for the first type of message;
establishing a first corresponding relationship between the first type of message and the processing manner for the first type of message;
storing the first corresponding relationship into the first proxy processing table.

9. The method of claim 6, wherein after the sending the first proxy processing table to a forwarding plane device, the method further comprises:
receiving, by the control plane device, a first message sent by the forwarding plane device, there being no message type that is identical to the type of the first message in the first proxy processing table;
parsing the first message, to acquire a second type corresponding to the first message and a processing manner for the second type of message;
establishing a second corresponding relationship between the second type of message and the processing manner for the second type of message;
storing the second corresponding relationship into a second proxy processing table.

10. The method of claim 9, further comprising:
sending, by the control plane device, the second proxy processing table to the forwarding plane device.

11. A message processing apparatus, comprising:
a first receiving module, which is configured for receiving a first proxy processing table, the first proxy processing table being configured for indicating a processing manner for a first type of message by a forwarding plane device;
a processing module, which is configured for processing a received first message based on the first proxy processing table.

12. The apparatus of claim 11, wherein the first receiving module is further configured for receiving a second message of the first type;
accordingly, the apparatus further comprises:
a first sending module, which is configured for sending the second message to a control plane device.

13. The apparatus of claim 12, wherein, the processing module is configured for:
acquiring a type of the first message;
matching a message type that is identical to the type of the first message in the first proxy processing table;
in response to a matching result being yes, processing the first message based on the processing manner corresponding to the message type acquired by matching.

14. The apparatus of claim 12, wherein, the processing module is configured for:
acquiring a type of the first message;
matching a message type that is identical to the type of the first message in the first proxy processing table;
in response to a matching result being no, forwarding the first message to the control plane device.

15. The apparatus of claim 14, wherein,
the first receiving module is further configured for receiving a second proxy processing table;
the processing module is further configured for updating the first proxy processing table by using the second proxy processing table.

16. A message processing apparatus, comprising:
a constructing module, which is configured for constructing a first proxy processing table based on a first type of message and a processing manner for the first type of message;
a second sending module, which is configured for sending the first proxy processing table to a forwarding plane device.

17. The apparatus of claim 16, further comprising:
a second receiving module, which is configured for receiving a second message of the first type sent by the forwarding plane device.

18. The apparatus of claim 17, wherein, the constructing module is configured for:
parsing the second message to acquire the first type corresponding to the second message and the processing manner for the first type of message;
establishing a first corresponding relationship between the first type of message and the processing manner for the first type of message;
storing the first corresponding relationship into the first proxy processing table.

19. The apparatus of claim 16, wherein,
the second receiving module is further configured for:
receiving a first message sent by the forwarding plane device, there being no message type that is identical to the type of the first message in the first proxy processing table;
the constructing module is further configured for:
parsing the first message, to acquire a second type corresponding to the first message and a processing manner for the second type of message;
establishing a second corresponding relationship between the second type of message and the processing manner for the second type of message;
storing the second corresponding relationship into a second proxy processing table.

20. The apparatus of claim 19, wherein, the second sending module is further configured for sending the second proxy processing table to the forwarding plane device.

21. A message processing apparatus, comprising:
a processor, and a memory configured for storing a computer program runnable on the processor;
wherein, the processor is configured for, when running the computer program, performing steps of the method of any of claims 1-5.

22. A message processing apparatus, comprising:
a processor, and a memory configured for storing a computer program runnable on the processor;
wherein, the processor is configured for, when running the computer program, performing steps of the method of any of claims 6-10.

23. A storage medium, which has a computer program stored thereon, wherein the computer program, when executed by a processor, implements steps of the method of any of claims 1-5.

24. A storage medium, which has a computer program stored thereon, wherein the computer program, when executed by a processor, implements steps of the method of any of claims 6-10.
